# EUROPÄISCHE PATENTSCHRIFT

(11) **EP 2 605 003 B1**
(45) Veröffentlichungstag und Bekanntmachung des Hinweises auf die Patenterteilung: **24.11.2021**
(21) Anmeldenummer: 13158989.7
(22) Anmeldetag: 27.04.2007
(51) Int. Cl.: G01N 21/64, G02B 21/16, G02B 21/36, G02B 27/58

(54) **Verfahren zum räumlich hochauflösenden Abbilden einer Struktur einer Probe**
Method for the high-resolution three-dimensional representation of the structure of a specimen
Procédé de représentation spatiale haute résolution de la structure d'un échantillon

(30) Priorität: 06.05.2006 DE 102006021317
(43) Veröffentlichungstag der Anmeldung: 19.06.2013
(62) Teilanmeldung aus: 07724644.5
(73) Patentinhaber: Max-Planck-Gesellschaft zur Förderung der Wissenschaften e.V., 80539 München (DE)
(72) Erfinder: Hell, Stefan W., 37085 Göttingen (DE)
(74) Vertreter: REHBERG HÜPPE + PARTNER

(56) Entgegenhaltungen:
- WO-A-2004/090617
- WO-A-2006/127692
- HESS S T, GIRIRAJAN T P K, AND MASON M D: "Ultra-high resolution imaging by fluorescence photoactivaction localization microscopy", BIOPHYSICAL JOURNAL, Bd. 91, Nr. 11, 1. Dezember 2006 (2006-12-01), Seiten 4258-4272, XP008082813, USA
- MICHAEL J RUST ET AL: "Sub-diffraction-limit imaging by stochastic optical reconstruction microscopy (STORM)", NATURE METHODS, NATURE PUBLISHING GROUP, GB, Bd. 3, Nr. 10, 9. August 2006 (2006-08-09) , Seiten 793-795, XP002492582, ISSN: 1548-7091, DOI: 10.1038/NMETH929 [gefunden am 2006-08-09]
- None

## Beschreibung

### TECHNISCHES GEBIET DER ERFINDUNG

Die Erfindung bezieht sich auf ein Verfahren zum räumlich hochauflösenden Abbilden einer Struktur einer Probe mit den Schritten des Oberbegriffs des Patentanspruchs 1.

### STAND DER TECHNIK

Ein Verfahren, das unmittelbar dem Oberbegriff des Patentanspruchs 1 entspricht, ist aus der WO 2004/090617 bekannt. Hier wird beim Überführen der Substanz mit dem Umschaltsignal in den zweiten Zustand jeweils nur ein definierter räumlicher Bereich der Probe gezielt ausgelassen. Dieser Bereich ist ein Intensitätsminimum eines Interferenzmusters mit Nullstelle, und die Intensität des Umschaltsignals ist bereits überall im Umfeld der Nullstelle so groß, dass sie einen Sättigungsgrenzwert für das vollständige Umschalten der Substanz in den zweiten Zustand überschreitet. Auf diese Weise kann ein optisches Messsignal, das von dem jeweils in dem ersten Zustand verbliebenen Anteil der Substanz ausgeht, dem gezielt mit dem Umschaltsignal ausgelassenen Bereich der Probe zugeordnet werden. Damit hängt die räumliche Auflösung beim Abbilden der interessierenden Struktur der Probe, die mit der Substanz markiert ist, nicht mehr von der räumlichen Auflösungsgrenze der Abbildung der Probe auf das verwendete Sensorarray ab. Vielmehr wird die räumliche Auflösung durch die Ausdehnung der Nullstelle des Umschaltsignals definiert, innerhalb derer sich die Substanz noch in dem ersten Zustand befindet, da aus dem Umfeld der Nullstelle kein Messsignal kommen kann und entsprechend auch nicht einer von der Nullstelle zu trennenden räumlichen Position zugeordnet werden muss. Im Ergebnis ist es beim räumlichen Abbilden der interessierenden Struktur einer Probe möglich, die Auflösungsgrenze (d.h. die beugungsbedingte Abbe'sche Grenze gegeben durch die Wellenlänge des Lichts geteilt durch die doppelte numerische Apertur), die grundsätzlich die räumliche Auflösung abbildender optischer Verfahren beschränkt und die direkt von der Wellenlänge des langwelligsten relevanten optischen Signals abhängt, zu unterschreiten.

Die Bestimmung der Lage der Nullstelle des Umschaltsignals innerhalb der Probe kann aus der Intensitätsverteilung des Messsignals über dem Sensorarray mit höherer Genauigkeit als der räumlichen Auflösungsgrenze der Abbildung erfolgen, soweit feststeht, dass das Messsignal nur aus dem Bereich dieser einen Nullstelle stammt. Die bei der Ortslagebestimmung erzielbare Genauigkeit hängt neben der Größe der Nullstelle im Wesentlichen nur von der Dichte der Pixel des Sensorarrays, bei dem es sich üblicherweise um eine CCD- oder CMOS-Kamera handelt, sowie dem erzielten Signal-zu-Rausch-Verhältnis und der Breite der Punktbildfunktion der Abbildung ab. Konkret liegt die erreichbare Genauigkeit bei der Ortslagebestimmung sogar weit unter dem Abstand der Pixel des Sensorarrays geteilt durch den Abbildungsmaßstab; bei gutem Signal-zu-Rausch-Verhältnis sogar weit unter einem Nanometer, was dem Fachmann bekannt ist

Dieses Phänomen wird bekanntermaßen auch bei der Lokalisation einzelner fluoreszierender Moleküle in einer Probe ausgenutzt. Voraussetzung ist hierbei jedoch, dass die einzelnen fluoreszierenden Moleküle einen Abstand zu den ihnen jeweils nächst benachbarten Molekülen aufweisen, der größer als die räumliche Auflösungsgrenze der Abbildung der Probe auf das Sensorarray ist, weil anderenfalls die von dem Sensorarray empfangenen optischen Messsignale von den einzelnen fluoreszierenden Molekülen miteinander verschmelzen. Wenn dies geschieht, können die Positionen der einzelnen Moleküle nicht mehr ohne weiteres bestimmt werden.

Bei dem aus der WO 2004/090617 A2 bekannten und allen anderen Verfahren, bei denen eine interessierende Struktur einer Probe mit einer ein Messsignal aussendenden Substanz, also insbesondere einer fluoreszierenden Substanz, markiert ist, ist die Dichte der Moleküle der Substanz in der Probe regelmäßig so groß, dass der Abstand der einzelnen Moleküle von ihren nächsten Nachbarn nur einem kleinen Bruchteil der räumlichen Auflösungsgrenze einer Abbildung der Probe auf das Sensorarray entspricht.

Aus der nachveröffentlichten WO 2006/127692 A2 ist ein Verfahren bekannt, bei dem beim Überführen des Anteils der Substanz in den zweiten Zustand eine Intensität des Umschaltsignals so eingestellt wird, dass ein mittleres Volumen pro in den zweiten Zustand überführtes Molekül der Substanz größer oder ungefähr gleich einem beugungsbegrenzten Auflösungsvolumen bei der Abbildung ist. Dies ist gleichbedeutend damit, dass zumindest ein wesentlicher Anteil der in den zweiten Zustand überführten Moleküle der Substanz einen Abstand zu den ihnen nächst benachbarten Molekülen in dem zweiten Zustand aufweisen, der größer als die räumliche Auflösungsgrenze der Abbildung der Probe auf das Sensorarray ist. Die Moleküle der Substanz werden als phototransformierbare optische Markierungen bezeichnet, die mit einem Strahlungssignal in den zweiten Zustand überführt werden. Nicht offenbart ist in der WO 2006/127692 A2, aber insbesondere, dass das von Molekülen in dem zweiten Zustand, die einen kleineren Abstand voneinander aufweisen, ausgehende Messsignal von dem Messsignal getrennt wird, das von den Molekülen in ausreichendem Abstand zueinander ausgeht und dass dazu geprüft wird, ob eine Gesamtintensität des Messsignals, eine Form und/oder eine Fläche der Intensitätsverteilung des Messsignals über dem Sensorarray einem einzelnen oder mehreren Molekülen entspricht, und dass nur für den Fall, dass eine Entsprechung zu einem einzelnen Molekül vorliegt, die Bestimmung der Ortslage dieses Moleküls aus der Intensitätsverteilung erfolgt. In der WO 2006/127692 A2 ist keine Deaktivierungsstrahlung, die auf die Probe aufgebracht wird, offenbart, die keine räumliche Strukturierung im Bereich der Probe aufweist.

Am 21.04.2006 hat Eric Betzig, einer der Erfinder der WO 2006/127692 A2, auf der Konferenz "Frontieres in Life Cell Imaging" im Natcher Conference Center, National Institute of Health, Bethesda, Maryland, USA, einen Vortrag "New Approaches to Cellular Imaging with High Spatial and Temporal Resolution" gehalten. In diesem Vortrag beschreibt er eine Ausführungsform des später in der WO 2006/127692 A2 veröffentlichten Verfahrens zum räumlich hochauflösenden Abbilden einer interessierenden Struktur einer Probe. Die interessierende Struktur wird gentechnisch mit Markern markiert, welche mit einem optischen Einschaltsignal aus einem nicht fluoreszenten ersten Zustand in einen fluoreszenten zweiten Zustand überführbar sind. Von diesen Markern wird mit einem Puls des Einschaltsignals ein kleiner Anteil in den zweiten Zustand überführt, wobei die in den zweiten Zustand überführten Moleküle einen größeren Abstand als die räumliche Auflösungsgrenze bei der Abbildung der Probe auf eine CCD-Kamera aufweisen. Die in den zweiten Zustand überführten Marker werden anschließend mit Anregungslicht beaufschlagt, um Fluoreszenzlicht mit der CCD-Kamera von ihnen zu registrieren. Dies geschieht solange, bis die in den zweiten Zustand überführten Moleküle weggebleicht sind. Dann wird ein anderer Anteil der Marker mit einem nächsten Puls des Einschaltsignals in den zweiten Zustand überführt. Das so über viele Stunden hinweg mit der Kamera registrierte Fluoreszenzlicht von verschiedenen Markern kann der Position der einzelnen Marker mit hoher Ortsauflösung zugeordnet werden. Herr Betzig bezeichnet in seinem Vortrag ein Blinken von Molekülen, als großes Problem beim Erhalten einer ausreichend großen Anzahl von Photonen von den Markern. Er sieht Möglichkeiten, die Algorithmen so zu optimieren, dass sie auch bei dichter gepackten Molekülen in der Probe noch zu einer korrekten Isolierung der Moleküle führen.

### AUFGABE DER ERFINDUNG

Der Erfindung liegt die Aufgabe zugrunde, ein Verfahren nach dem Oberbegriff des Patentanspruchs 1 aufzuzeigen, mit dem die Beugungsgrenze beim Abbilden der interessierenden Struktur der Probe unterschreitbar ist, ohne dass hierfür das Umschaltsignal mit einer räumlich fein strukturierten Intensitätsverteilung auf die Probe aufgebracht werden muss.

### LÖSUNG

Die Aufgabe der Erfindung wird durch ein Verfahren mit den Merkmalen des Patentanspruchs 1 gelöst. Bevorzugte Ausführungsformen des Verfahrens gemäß dem Patentanspruch 1 sind in den abhängigen Patentansprüchen definiert.

### BESCHREIBUNG DER ERFINDUNG

Bei einem Verfahren, das zu dem erfindungsgemäßen Verfahren invers ist, wird das optische Messsignal registriert, das von dem jeweiligen Anteil der Substanz in dem zweiten Zustand ausgeht. Bei dem zu dem erfindungsgemäßen Verfahren inversen Verfahren wird beim Überführen des Anteils der Substanz in den zweiten Zustand eine Intensität des Umschaltsignals so eingestellt, dass ein wesentlicher Prozentsatz der jeweils in den zweiten Zustand überführten Moleküle einen Abstand zu den ihnen nächst benachbarten Molekülen in dem zweiten Zustand aufweist, der größer als die räumliche Auflösungsgrenze der Abbildung der Probe auf das Sensorarray ist. Für jedes Molekül der Substanz, das zu diesem wesentlichen Prozentsatz gehört, kann seine Lage in der Probe aus der Intensitätsverteilung des von ihm ausgehenden optischen Messsignals über das Sensorarray mit der bereits grundsätzlich bekannten extrem hohen Ortsauflösung, die die räumliche Auflösungsgrenze der Abbildung der Probe auf das Sensorarray deutlich unterschreitet, bestimmt werden. Diese lässt aber auch die Abbildung der mit der Substanz markierten interessierenden Struktur der Probe mit dieser extrem hohen Ortsauflösung zu. Es müssen nur immer wieder andere Moleküle der Substanz in den zweiten Zustand überführt werden, wobei diese Moleküle zu dem Wesentlichen Prozentsatz der Moleküle der Substanz in dem zweiten Zustand gehören, in dem diese einen Abstand zu den ihnen nächst benachbarten Molekülen in dem zweiten Zustand aufweisen, der größer als die räumliche Auflösungsgrenze der Abbildung der Probe auf das Sensorarray ist. Dies stellt aber kein Problem dar, da die Auswahl der Moleküle, für die diese Bedingung zutrifft, auf Übergangswahrscheinlichkeiten beruht und damit statistischen Gesetzmäßigkeiten gehorcht. Da man mit jedem Umschaltzyklus statistisch gesehen eher andere Moleküle der Substanz in den zweiten Zustand schaltet, wird die mit der Substanz markierten Struktur der Probe mit immer höherer Dichte nach der Position einzelnen Moleküle der Substanz abgefragt. Die Summe dieser Positionen ist die mit dem zu dem erfindungsgemäßen Verfahren inversen Verfahren gewonnene Abbildung der interessierenden Struktur, die die Ortsauflösung weit jenseits der üblichen Auflösungsgrenze aufweist. Dabei mögen zwar einzelne Moleküle wiederholt zu der Auswahl gehören, die dem hier aufgestellten Kriterium genügt. Gerade dann, wenn immer nur ein vergleichsweise kleiner Anteil der in dem betrachteten Bereich der Probe insgesamt vorhandenen Moleküle in den zweiten Zustand überführt wird und das Abstandkriterium erfüllt, ist der Anteil der Moleküle, deren genaue Ortslage mehrfach bestimmbar wird, gegenüber den Molekülen, die auch bei einem häufigen Wiederholen des Überführens des Anteils der Substanz in den zweiten Zustand nur einmal zu dem wesentlichen Prozentsatz gehören, für den eine genaue Bestimmung der Ortslage möglich ist, vernachlässigbar. Selbst wenn dieser Anteil größer ist, wird hierdurch allenfalls die Effizienz, d.h. insbesondere die Geschwindigkeit, nicht aber die Funktion des Verfahrens beeinträchtigt. Dem liegt zugrunde, dass durch die Selektion der Moleküle für die Ortsbestimmung mit höchster Ortsauflösung aufgrund von Übergangswahrscheinlichkeiten die Gesamtheit der Moleküle, deren Ortsbestimmung erfolgt, bei ausreichend großer Anzahl, d.h. ausreichend großem Stichprobenumfang, aus statistischen Gesetzmäßigkeiten repräsentativ für die Gesamtheit der in der Probe vorhandenen Moleküle der Substanz und damit für die mit dieser markierten interessierenden Struktur der Probe ist.

Um aus der Intensitätsverteilung des von einem Molekül der Substanz in dem zweiten Zustand kommenden Messsignals über das Sensorarray die Lage des Moleküls in der Probe mit einer höheren Ortsauflösung als der räumlichen Auflösungsgrenze der Abbildung der Probe auf das Sensorarray bestimmen zu können, versteht es sich, dass das Rastermaß der Pixel des Sensorarrays zumindest kleiner sein muss als die räumlichen Auflösungsgrenze mal dem Abbildungsfaktor der Abbildung. Bevorzugt ist das Rastermaß nur maximal halb so groß wie die räumliche Auflösungsgrenze mal dem Abbildungsfaktor der Abbildung, so dass das von einem Molekül ausgehende Messsignal auf mindestens vier Pixel des Sensorarrays verteilt ist. Ein viel kleineres Rastermaß der Pixel des Sensorarrays ist mit keiner entsprechenden Steigerung der Ortsauflösung bei der Bestimmung der Lage der Moleküle in der Probe mehr verbunden. Vielmehr besteht die Gefahr, dass das Signal-zu-Rausch-Verhältnis deutlich schlechter wird. Ein Rastermaß, das zwischen 60 und 10 % der räumlichen Auflösungsgrenze mal dem Abbildungsfaktor der Abbildung liegt, wird daher in der Regel am günstigsten sein.

Der wesentliche Prozentsatz der jeweils zu einem Zeitpunkt in den zweiten Zustand überführten Moleküle, der das Kriterium des größeren Abstands der Moleküle in dem zweiten Zustand als die räumliche Auflösungsgrenze der Abbildung der Probe auf das Sensorarray erfüllt, beträgt mindestens 10 %. Insbesondere, wenn der hiezu komplementäre Prozentsatz der Moleküle in dem zweiten Zustand, die einen kleineren Abstand voneinander aufweisen, vergleichsweise groß ist, ist es wichtig, dass von diesem ausgehende Messsignal bzw. dessen Intensitätsverteilung über das Sensorarray von dem Messsignal zu trennen, das von den Molekülen in ausreichendem Abstand zueinander ausgeht. Dies kann dadurch erfolgen, dass geprüft wird, ob die Gesamtintensität des Messsignals, die Form und/oder die Fläche der Intensitätsverteilung des Messsignals über dem Sensorarray einem einzelnen oder mehreren Molekülen entspricht. Nur für den Fall, dass eine Entsprechung zu einem einzelnen Molekül vorliegt, erfolgt dann die Bestimmung der Ortslage dieses Moleküls aus der Intensitätsverteilung. Es versteht sich, dass es sinnvoll ist, für einen möglichst großen prozentualen Anteil der registrierten lokalen Intensitätsverteilungen Ortslagen einzelner Moleküle der Substanz und damit Positionen der Interessierenden Struktur der Probe bestimmen zu können. Aus diesem Grund ist es bevorzugt, wenn ein möglichst großer Prozentsatz der jeweils in den zweiten Zustand überführten Moleküle den notwendigen großen Abstand zu benachbarten Molekülen in dem zweiten Zustand aufweist. Im Patentanspruch 2 ist eine aufsteigende Folge von Prozentsätzen angeführt, die in dieser Reihenfolge in zunehmendem Maße präferiert werden. Es macht jedoch wenig Sinn, zu versuchen, für alle in den zweiten Zustand überführten Moleküle zu verhindern, dass diese keinen Nachbarn aufweisen, der sich ebenfalls in dem zweiten Zustand befindet und dessen Abstand kleiner als die räumliche Auflösungsgrenze der Abbildung der Probe auf das Sensorarray ist, weil dabei der mittlere Abstand der Moleküle, die sich jeweils in dem zweiten Zustand befinden dürfen, sehr groß wird, was zur Folge hat, dass die Anzahl der Ortslagen von Molekülen, die nach einem Umschaltvorgang in den zweiten Zustand bestimmt werden können, wieder abnimmt. Mit welcher Intensität des Umschaltsignals die interessierende Struktur der Probe letztlich am schnellsten, d. h. mit den wenigsten Wiederholungen des Umschaltvorgangs, abgebildet werden kann, hängt letztlich davon ab, wie groß der Aufwand dafür ist, zwischen einer Intensitätsverteilung des Messsignals über das Sensorarray zu unterscheiden, die nur einem Molekül in dem zweiten Zustand oder zwei oder mehreren benachbarten Molekülen in dem zweiten Zustand zuzuordnen ist.

Da das Verfahren ohne eine räumliche Strukturierung des Umschaltsignals im Bereich der Probe auskommt, kann das Umschaltsignal grundsätzlich auch ein nicht-optisches Signal sein, obwohl ein optisches Umschaltsignal auch wegen seiner einfacheren Handhabbarkeit bevorzugt ist. Mit einem optischen Umschaltsignal können beispielsweise unterschiedliche Bereiche der Probe leicht mit unterschiedlichen Intensitäten des Umschaltsignals beaufschlagt werden, um dafür Rechnung zu tragen, dass die Substanz, mit der die interessierende Struktur der Probe markiert ist, in diesen unterschiedlichen Bereichen in stark unterschiedlichen Konzentrationen vorliegt. Dennoch wird es immer so sein, dass die Intensität des Umschaltsignals bei dem Verfahren über Bereiche die größere Abmessungen als die räumliche Auflösungsgrenze der Abbildung der Probe auf das Sensorarray haben, einen konstanten Wert aufweist. Dieser konstante Wert kann konkret umgekehrt proportional zu einer mittleren lokalen Konzentration der Substanz in diesem Bereich der Probe festgelegt werden. Um diese Konzentration zu bestimmen, kann zunächst ein größerer Anteil der Substanz in den zweiten Zustand überführt werden als später bei der Ortsbestimmung einzelner Moleküle, wozu auch eine größere Intensität des Umschaltsignals eingestellt wird als bei der Positionsbestimmung der einzelnen Moleküle mit dem Sensorarray. Die sich damit ergebene Intensitätsverteilung des Messsignals über dem Sensorarray entspricht der Konzentrationsverteilung der zweiten Substanz über die Probe, wobei die Ortsauflösung dieser Konzentrationsverteilung durch die räumliche Auflösungsgrenze der Abbildung der Probe auf das Sensorarray bestimmt ist.

Um sehr schnell festzustellen, ob das aus einem Bereich der Probe, der mehreren Pixeln des Sensorarrays entspricht, stammende Messsignal einem oder mehreren Molekülen der Substanz zuzuordnen ist, so dass es sich lohnt, eine Intensitätsverteilung des Messsignals aufzuzeichnen, um hieraus eine Ortsbestimmung eines einzelnen Moleküls vorzunehmen, oder nicht, kann dieser Bereich parallel zu dem Sensorarray auf einen Photodetektor abgebildet werden, mit dem die zeitliche Abfolge der Emission einzelner Photonen aus dem Bereich beobachtbar ist. Wenn sich nur ein einzelnes Molekül in dem Bereich in dem zweiten Zustand befindet, weisen die von diesem emittierten Photonen des Messsignals einen zeitlichen Mindestabstand auf, weil das Molekül in einem Zyklus seiner Anregung jeweils nur ein Photon emittieren kann. Entsprechend weisen kürzer aufeinander folgende Photonen darauf hin, dass diese von mehreren Molekülen emittiert wurden, die sich in dem Bereich in dem zweiten Zustand befinden. In diesem Fall kann der Vorgang der Aufzeichnung der Intensitätsverteilung des Messsignals abgebrochen und erneut versucht werden, in dem Bereich nur ein einziges Molekül der Substanz in den zweiten Zustand zu schalten. Der Photodetektor für das Beobachten der zeitlichen Abfolge der Emission einzelner Photonen aus dem Bereich kann eine einzige Detektoreinheit aufweisen, wenn deren Totzeit nach dem Registrieren eines ersten Photons hinreichend kurz ist. Ansonsten sollte der Photodetektor aus zwei Detektoreinheiten aufgebaut sein, mit denen im Sinne eines Koinzidenzdetektors gezielt nach quasi gleichzeitig emittierten Photonen aus dem Bereich gesucht wird. Diese sind ein Hinweis auf mehrere sich gleichzeitig in dem Bereich in dem zweiten Zustand befindliche Moleküle der Substanz.

Wie schon in der bisherigen Beschreibung angedeutet wurde, bezieht sich ein zur Erfindung inverses Verfahren auf solche Ausführungsformen, bei denen die Substanz aus einer Untergruppe von Substanzen ausgewählt wird, die in dem zweiten Zustand mit einem optischen Anregungssignal zur spontanen Emission von Fluoreszenzlicht anregbar sind, das mit dem Sensorarray als optisches Messsignal registriert wird.

Weiterhin kann die Substanz aus einer Untergruppe von Substanzen ausgewählt werden, die mit einem optischen Rückschaltsignal aus dem zweiten Zustand zurück in den ersten Zustand überführbar sind. In diesem Fall kann vor dem Überführen eines anderen Anteils der Substanz mit dem Umschaltsignal in den zweiten Zustand der zuvor in den zweiten Zustand überführte Anteil der Substanz mit dem Rückschaltsignal gezielt in den ersten Zustand zurück überführt werden. Es muss damit kein Zeitraum abgewartet werden, binnen dessen die Moleküle der Substanz aus dem zweiten Zustand beispielsweise aufgrund thermischer Anregung oder auch unter dem Einfluss des optischen Anregungssignals, das hier primär zur spontanen Emission von Fluoreszenzlicht anregen soll, in den ersten Zustand zurückgekehrt sind. Wenn jedoch die Halbwertszeit der Moleküle der Substanz in dem zweiten Zustand eine günstige Größenordnung aufweist, kann das Verfahren auch dann sehr effektiv durchgeführt werden, wenn die Substanz nicht mit einem optischen Rückschaltsignal aus dem zweiten Zustand zurück in den ersten Zustand überführbar ist.

Eine besonders bevorzugt Gruppe von Substanzen zur Verwendung bei dem Verfahren sind sogenannte Förster-Resonanzenergietransfer-Paare, die üblicherweise kurz als FRET-Paare bezeichnet werden und die aus einem (Energie-) Donor und einem (Energie-) Akzeptor bestehen. Für die Verwendung bei dem Verfahren sind primär solche FRET-Paare geeignet, bei denen der Akzeptor photochrom ist und mit dem Umschaltsignal geschaltet wird, um Fluoreszenzeigenschaften des Donors zu modulieren. Der Akzeptor kann dabei seinerseits fluoreszent sein, was dann aber bei dem Verfahren in der Regel nicht ausgenutzt wird.

In den Fällen, in denen die interessierende Struktur in der Probe durch ein Protein definiert ist, ist es von Vorteil, wenn die Substanz, mit der die interessierende Struktur markiert wird, gentechnisch in das Molekül eingebaut oder an dieses angebaut wird. Dabei kann der Ein- bzw. Anbau direkt erfolgen, d. h. die markierende Substanz kann als solche im Sinne eines Fusionsproteins direkt in das Protein in der Probe eingesetzt oder an dieses angehängt werden. Es ist aber auch möglich, nur einen Anbindungsplatz für die markierende Substanz in das Protein einzusetzen oder an dieses anzuhängen, über den dann später die Markierung mit der Substanz erfolgen kann. Ein als solcher, grundsätzlich bekannter Anbindungsplatz für fluoreszente Proteine zur Markierung eines Proteins besteht beispielsweise aus der Folge von 4 Cysteinen in der Aminosäuresequenz des Proteins, d. h. aus einem so genannten Tetracystein-Motiv. Von besonderem Vorteil ist es, wenn das gentechnische Ein- bzw. Anbauen der Substanz bzw. des Anbindungsplatzes für die Substanz in bzw. an das Protein in der Probe durch Expression des derart modifizierten Proteins anstelle des ursprünglichen Proteins in mindestens einer Zelle innerhalb der Probe erfolgt, so dass die interessierende Struktur unmittelbar durch das mit der markierenden Substanz oder mit den Anbindungsplätzen für diese modifizierte Protein ausgebildet wird.

Die extrem hohe Ortsauflösung bei Lagebestimmung der Position der einzelnen Moleküle der markierenden Substanz in der Probe eröffnet die Möglichkeit, die räumliche Anordnung sehr kleiner Strukturen in der Probe zu beobachten. Eine solche Struktur kann aus einem einzigen Proteinmolekül bestehen, das dann an mehreren verschiedenen Punkten mit der Substanz zu markieren ist. Diese Punkte liegen ganz typischerweise in einem Abstand zusammen, der kleiner als die räumliche Auflösungsgrenze bei jeder denkbaren optischen Abbildung des Proteins ist. Bei dem Verfahren wird das Messsignal von der Substanz zu einem Zeitpunkt jeweils nur an einem der Punkte, an dem das Proteinmolekül mit der Substanz markiert ist, abgefragt. Bei jeder Wiederholung der Abfrage wird mit dem Umschaltsignal die Substanz wieder nur an einem der Markierungspunkte in den das Messsignal abgebenden zweiten Zustand umgeschaltet. Dies kann zwar derselbe Punkt wie zuvor sein. Da aber dieser Vorgang durch Übergangswahrscheinlichkeiten gesteuert wird, kann bei einer hinreichend großen Anzahl an Wiederholungen der Abfrage fest davon ausgegangen werden, dass die Substanz an allen Markierungspunkten des Proteinmoleküls abgefragt und entsprechend die Lage aller markierten Punkte des Proteinmoleküls mit höchster Ortsauflösung bestimmt wird. Die Ortsauflösung ist dabei so groß, dass auch Proteinfaltungen und andere Konformationsänderungen von Proteinmolekülen beobachtbar sein werden.

Die Abbildung der gesamten mit der Substanz markierten Struktur erfordert bei dem zu dem erfindungsgemäßen Verfahren inversen Verfahren eine vergleichsweise große Anzahl von Wiederholungen des Schaltens eines vergleichsweise kleinen Anteils der Substanz in den zweiten Zustand, in dem sie das Messsignal, das mit dem Sensorarray registriert wird, emittiert. Wenn diese Wiederholungen sehr schnell erfolgen, kann dennoch die für das Abbilden der interessierenden Struktur einer Probe insgesamt benötigte Zeit immer noch relativ kurz sein. Sie kann aber in jedem Fall dadurch verkürzt werden, dass das Verfahren mit mindestens zwei verschiedenen Substanzen, von denen in ihren jeweils zweiten Zustand unterscheidbare optische Messsignale ausgehen, parallel durchgeführt wird. Die Geschwindigkeit des Verfahrens wird dadurch begrenzt, dass die Dichte der Moleküle der Substanz in dem zweiten Zustand, die einen ausreichenden Abstand voneinander aufweisen, und damit die Anzahl der Moleküle, deren Ortslagen in einem Zyklus des Verfahrens bestimmt werden kann, naturgemäß beschränkt ist. Solange sich die optischen Messsignale von zwei verschiedenen die interessierte Struktur markierenden Substanzen soweit unterscheiden, dass sie sich trennen lassen, kann durch Einsatz derart verschiedener Substanzen die Anzahl der Moleküle, deren Ortslagen in einem Zyklus des Verfahrens bestimmt wird, proportional zur Anzahl der unterschiedlichen Substanzen gesteigert werden.

Wie bereits eingangs festgestellt wurde, stellt das erfindungsgemäße Verfahren gemäß dem Patentanspruch 1 eine Inversion des vorstehend beschriebenen Verfahrens dar. Konkret bedeutet dies, dass bei dem Verfahren gemäß Patentanspruch 1 mit dem Sensorarray ein optisches Messsignal registriert wird, das nicht von den in den zweiten Zustand umgeschalteten Molekülen der Substanz ausgeht, sondern von den noch in dem ersten Zustand verbliebenen Molekülen der Substanz. Entsprechend besteht die erfindungsgemäße Ausgestaltung des Verfahrens hier darin, beim Überführen des Anteils der Substanz in den zweiten Zustand eine Intensität des Umschaltsignals so groß einzustellen, dass ein wesentlicher Prozentsatz der jeweils in dem ersten Zustand verbleibenden Moleküle einen Abstand zu den Ihnen nächst benachbarten Molekülen in dem ersten Zustand aufweist, der größer als die räumliche Auflösungsgrenze der Abbildung der Probe auf das Sensorarray ist. Unter Berücksichtigung dieses Unterschieds treffen alle voranstehenden Ausführungen zu bevorzugten Ausführungsformen des zu dem erfindungsgemäßen Verfahren inversen Verfahrens auch auf das neue Verfahren gemäß dem Patentanspruch 1 zu. Der Unterschied macht sich dabei im Wesentlichen nur darin bemerkbar, dass die notwendige Intensität des Umschaltsignals mit zunehmender Konzentration der markierenden Substanz in der Probe nicht ab- sondern zunimmt, weil bei einer größeren Anzahl von Molekülen der Substanz in dem jeweils betrachteten Bereich mehr Moleküle in den zweiten Zustand überführt werden müssen, um nur die für das neue Verfahren tolerierbar geringe Dichte an Molekülen in dem ersten Zustand zu belassen. Diese letztgenannte Dichte ist unabhängig von der Konzentration der Moleküle in der Probe.

Ein Fluoreszenzlichtmikroskop zur Durchführung einer der beiden Ausführungsformen des neuen Verfahrens unterscheidet sich von bekannten Fluoreszenzmikroskopen, mit denen eine räumliche Auflösung besser als die Beugungsgrenze erreicht wird, dadurch, dass keine Maßnahmen zur Feinstrukturierung des Umschaltsignals von der Umschaltsignalquelle vorhanden sind, sondern dass statt dessen eine Steuerung der Schaltsignalquelle eine Intensität des Schaltsignals gemäß dem neuen Verfahren einstellt.

Zusätzlich kann mindestens ein Photodetektor vorhanden sein, auf den ein Bereich der Probe, der mehreren Pixeln des Sensorarrays entspricht, abgebildet wird, um die zeitliche Abfolge der Emission einzelner Photonen aus diesem Bereich zu beobachten. Wie bereits im Zusammenhang mit dem Verfahren erläutert wurde, kann mit einem solchen Photodetektor sehr schnell, d. h. insbesondere noch vor dem Auslesen des Sensorarrays festgestellt werden, ob in dem jeweiligen Bereich die Intensität des Messsignals von nur einem oder mehreren Molekülen der Substanz registriert wird, um beispielsweise das Registrieren zugunsten eines neuen Versuchs abzubrechen, wenn nicht feststeht, dass die Intensität nur von einem einzelnen Molekül stammt. Dies ist insofern von größerer Bedeutung, als dass das Auslesen eines Sensorarrays häufig der geschwindigkeitsbegrenzende Faktor beim Abschluss eines Zyklus des Verfahrens ist. Das Sensorarray muss ausgelesen sein, bevor mit dem Umschaltsignal eine neue Auswahl an Molekülen der Substanz getroffen werden kann, die sich dann in dem das Messsignal abgebenden Zustand befinden, so dass das Messsignal von dieser neuen Auswahl an Molekülen stammen kann. Für die Durchführung des Verfahrens und das Fluoreszenzlichtmikroskop geeignete Sensorarrays umfassen CCD- und vorzugsweise CMOS-Sensorarrays üblicher Bauart, bei deren Auswahl aber neben der Möglichkeit eines schnellen Auslesens darauf zu achten ist, dass das Dunkel- und Ausleserauschen gering ausfällt, damit sich bei der Durchführung des neuen Verfahrens ein gutes Signal zu Rauschen-Verhältnis ergibt.

Das Fluoreszenzmikroskop zur Durchführung des Verfahrens kann weiterhin eine separate Rückschaltsignalquelle zur Beaufschlagung der Probe mit einem Rückschaltsignal aufweisen. Bereits bei der Beschreibung des Verfahrens wurde jedoch darauf hingewiesen, dass die Substanz, mit der die interessierende Struktur der Probe markiert ist, auch spontan, d. h. thermisch angeregt, aus ihrem zweiten Zustand in ihren ersten Zustand zurückkehren kann oder dass dieser Übergang auch durch das Anregungssignal ausgelöst werden kann, mit dem die Substanz primär zur Emission des Messsignals angeregt wird.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: skizziert den Aufbau eines Fluoreszenzlichtmikroskops in einer ersten Ausführungsform zur Durchführung des zu dem erfindungsgemäßen Verfahren inversen Verfahrens zum räumlich hoch auflösenden Abbilden einer interessierenden Struktur einer Probe in einer ersten Ausführungsform.
- **Fig. 2**: skizziert eine dichte uniforme Verteilung von fluoreszierenden Molekülen einer die interessierende Struktur der Probe markierenden Substanz und die resultierende Intensitätsverteilung des Fluoreszenzlichts über dem entsprechenden Bereich eines Sensorarrays, auf den die Probe bei dem Fluoreszenzlichtmikroskop gemäß Fig. 1 abgebildet wird.
- **Fig. 3**: skizziert die Intensitätsverteilung des Messsignals über dem Sensorarray für den Fall eines einzelnen und zweier eng benachbarter Moleküle in einem Bereich der Probe.
- **Fig. 4**: ist ein Schnitt durch die Intensitätsverteilung über das Sensorarray gemäß Fig. 3, die dem einen Molekül entspricht.
- **Fig. 5**: ist ein Schnitt durch die Intensitätsverteilung des Messsignals über das Sensorarray gemäß Fig. 3, die den beiden dicht benachbarten Molekülen entspricht.
- **Fig. 6**: skizziert den Aufbau eines Lichtmikroskops in einer zweiten, gegenüber Fig. 1 um eine Rückschaltsignalquelle ergänzten Ausführungsform.
- **Fig. 7**: skizziert eine weitere Ausführungsform des Fluoreszenzlichtmikroskops, wobei hier gegenüber Fig. 1 ein Photodetektor ergänzt ist.
- **Fig. 8**: zeigt ein einzelnes Molekül in dem Beobachtungsbereich des Photodetektors gemäß Fig. 7.
- **Fig. 9**: skizziert die zeitliche Abfolge von Photonen des Messsignals, die der Photodetektor gemäß Fig. 7 von dem Molekül gemäß Fig. 8 empfängt.
- **Fig. 10**: skizziert zwei Moleküle in dem Beobachtungsbereich des Photodetektors gemäß Fig. 7.
- **Fig. 11**: skizziert die Abfolge von Photonen des Messsignals von den beiden Molekülen gemäß Fig. 10.
- **Fig. 12**: skizziert die zeitliche Abfolge der verschiedenen optischen Signale bei der Ausführungsform des Fluoreszenzlichtmikroskops gemäß Fig. 1.
- **Fig. 13**: skizziert die zeitliche Abfolge der verschiedenen optischen Signale bei der Ausführungsform des Fluoreszenzlichtmikroskops gemäß Fig. 6.
- **Fig. 14**: skizziert den Aufbau und die Funktion eines FRET-Paars aus Donor und Akzeptor, das als Substanz zur Markierung der interessierenden Struktur der Probe einsetzbar ist; und
- **Fig. 15**: skizziert die Markierung eines einzelnen Proteinmoleküls mit mehreren FRET-Paaren gemäß Fig. 14.

### FIGURENBESCHREIBUNG

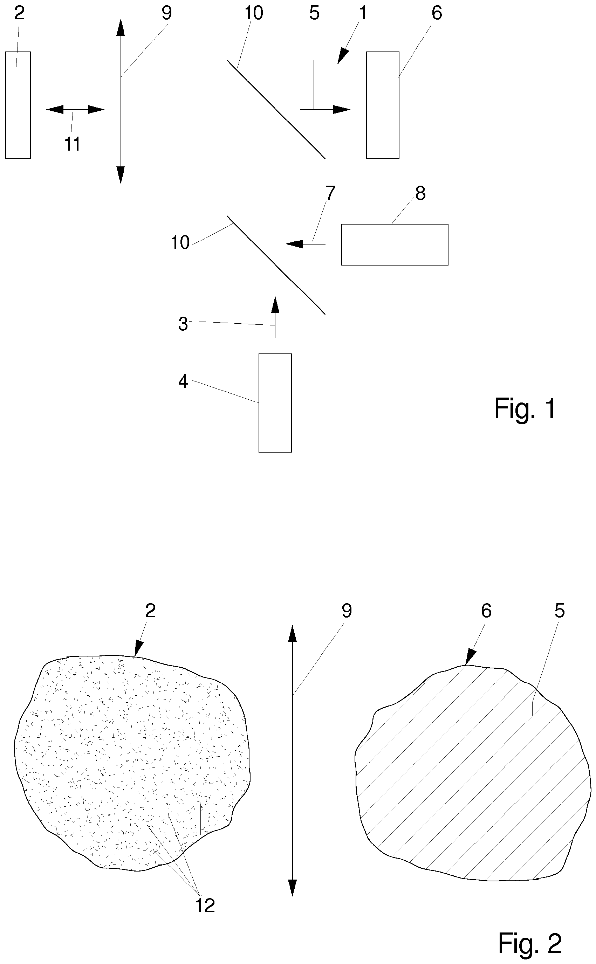

Das in **Fig. 1** skizzierte Fluoreszenzlichtmikroskop 1 dient zum räumlich hoch auflösenden Abbilden einer interessierenden Struktur innerhalb einer Probe 2. Die interessierende Struktur innerhalb der Probe 2, die hier nicht hervorgehoben dargestellt ist, ist mit einer Substanz markiert, deren Moleküle zwei Zustände aufweisen, und zwar einen ersten, in dem sie nicht fluoreszent sind, und einen zweiten, in dem sie durch ein optisches Anregungssignal 3 von einer Anregungssignalquelle 4 zur spontanen Emission von Fluoreszenzlicht angeregt werden, das als Messsignal 5 von einem Sensorarray 6 registriert wird. Zwischen dem ersten und dem zweiten Zustand sind die Moleküle der Substanz mit einem optischen Umschaltsignal 7 von einer Umschaltsignalquelle 8 umschaltbar. Dabei ist eine Steuerung der Umschaltsignalquelle 8, die hier nicht separat wiedergegeben ist, so ausgelegt, dass sie die Intensität des Umschaltsignals 7 so einstellt, dass jeweils nur so viel Moleküle der Substanz, mit der die interessierende Struktur der Probe 2 markiert ist, in dem zweiten Zustand sind, dass der Abstand der fluoreszierenden Moleküle in dem zweiten Zustand größer ist als eine räumliche Auflösungsgrenze bei der Abbildung der Probe 2 mit einer in Fig. 1 nur angedeuteten Abbildungsoptik 9 auf das Sensorarray 6. Dies ermöglicht es, die Ortslagen der in dem zweiten Zustand befindlichen Moleküle der Substanz in der Probe 2 aufgrund der ihnen zugehörigen Intensitätsverteilungen des Messsignals 5 über das Sensorarray 6 mit einer weit über die räumliche Auflösungsgrenze der Abbildung hinausgehenden Genauigkeit zu bestimmen, die neben der Größe der Moleküle der Substanz im Wesentlichen von der Dichte der Pixel des Sensorarrays 6, dem Abbildungsmaßstab und dem Signal-zu-Rausch-Verhältnis abhängt. Dabei kann die Ortsbestimmung den Pixelabstand des Sensorarrays 6 sogar unterschreiten. Die in Fig. 1 wieder nur angedeuteten halb durchlässigen Spiegel 10 dienen zum Überlagern der Strahlengänge des Anregungssignals 3 und des Umschaltsignals 7 bzw. zum Abtrennen des Messsignals 5, das von der Probe ausgeht. Zusätzlich werden hier in aller Regel schmalbandige Farbfilter eingesetzt sein, so dass von dem Sensorarray 6 nur das interessierende Messsignal 5 und keine von der Probe reflektierten Anteile des Anregungssignals 3 oder des Umschaltsignals 7 registriert werden. Ein Doppelpfeil 11 vor der Probe 2 deutet an, dass die Probe 2 sowohl mit optischen Signalen 3, 7 beaufschlagt wird, als auch das optische Messsignal 5 emittiert.

**Fig. 2** skizziert eine uniforme statistische Verteilung von Molekülen 12 der markierenden Substanz in der Probe 2. Die dargestellten Moleküle 12 befinden sich sämtlich in ihrem fluoreszierenden zweiten Zustand. Der Abstand der Moleküle 12 ist kleiner als die räumliche Auflösungsgrenze bei der Abbildung der Probe 2 mit der Abbildungsoptik 9 auf das Sensorarray 6. Konkret ist hier der Abstand der Moleküle 12 sogar viel kleiner als die Auflösungsgrenze. Hieraus resultiert eine Intensitätsverteilung des Messsignals 5 über das Sensorarray 6, die abgesehen von statistischen Schwankungen und Rauschen konstant ist, was in Fig. 2 durch eine gleichmäßige Schraffur des dargestellten Bereichs des Sensorarrays 6 symbolisiert ist. Die Bestimmung der Ortslage einzelner Moleküle 12 aus den mit dem Sensorarray 6 registrierten Messsignal 5 ist so nicht möglich. Auch eine in Fig. 2 nicht vorhandene Strukturierung der Verteilung der Moleküle 12 innerhalb der Probe 2 könnte bei derart gering beabstandeten Molekülen 12 in dem fluoreszierenden Zustand nur bis zur räumlichen Auflösungsgrenze der Abbildung der Probe 2 mit der Abbildungsoptik 9 auf das Sensorarray 6 aufgelöst werden. Bei dem zu dem erfindungsgemäßen Verfahren inversen Verfahren, bei dem immer nur ein kleiner Anteil der Moleküle 12 in deren fluoreszenzfähigen Zustand überführt wird, ist die Dichte der überhaupt vorhandenen Moleküle irrelevant.

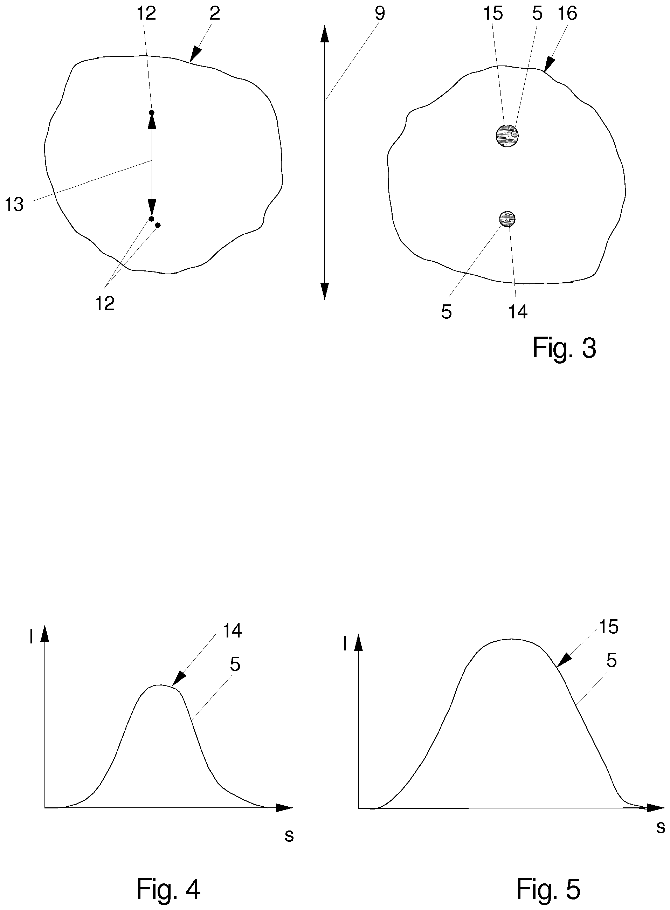

**Fig. 3** skizziert die Abbildung eines Bereichs der Probe 2 auf das Sensorarray 6 in dem sich insgesamt drei Moleküle 12 in dem fluoreszierenden zweiten Zustand befinden. Dabei liegen zwei der Moleküle 12 paarweise dicht beieinander, während der Abstand 13 des dritten Moleküls 12 von diesem Paar größer ist und zwar größer als die räumliche Auflösungsgrenze bei der Abbildung der Probe 2 der Abbildungsoptik 9 auf das Sensorarray 6. Der Abstand der beiden Moleküle 12 des Paars ist hingegen kleiner als die Auflösungsgrenze. Das von den Molekülen 12 ausgehende Fluoreszenzlicht registriert das Sensorarray 6 als zwei diskrete Intensitätsverteilungen 14 und 15 des Messsignals 5. Die Intensitätsverteilung 14 entspricht dabei dem einzelnen Molekül 12, während die Intensitätsverteilung 15 dem Paar von Molekülen 12 entspricht.

Schnitte durch die Intensitätsverteilungen 14 und 15 sind in den **Fig. 4 und 5** wiedergegeben. Die Intensitätsverteilungen unterscheiden sich in ihrer Form nicht wesentlich. Beide Intensitätsverteilungen sind grundsätzlich Airy-Scheiben. Die Intensitätsverteilung 15 weist jedoch ein doppelt so großes Integral wie die Intensitätsverteilung 14 und eine größere Halbwertsbreite auf. Aus der Intensitätsverteilung 14 kann die Ortslage des Moleküls 12 in der Probe 2 sehr genau und zwar insbesondere mit einer höheren Auflösung als der räumlichen Auflösungsgrenze der Abbildung der Probe 2 mit der Abbildungsoptik 9 auf das Sensorarray 6 ermittelt werden. Dabei kann aus der lateralen Lage der Intensitätsverteilung 14 auf dem Sensorarray 6 auf den Ort in der x-y-Ebene der Probe 2 geschlossen werden, während die Form der Intensitätsverteilung 14 Rückschlüsse auf die Ortslage in Z-Richtung innerhalb der Probe 2 zuläßt. Anders ist es mit der Intensitätsverteilung 15. Dieser kann zwar auch ein Ort in der Probe zugeordnet werden. Dies ist aber nur der mittlere Ort der beiden Moleküle 12 des Paars. Wo sich die beiden Moleküle 12 relativ zu dem mittleren Ort befinden, geht aus der Intensitätsverteilung 15 nicht hervor. Aus diesem Grund wird bei dem zu dem erfindungsgemäßen Verfahren inversen Verfahren zum räumlich hoch auflösenden Abbilden einer mit der Substanz markierten Struktur der Probe 2 jeweils nur ein so geringer Anteil der Moleküle 12 mit dem Schaltsignal 7 gemäß Fig. 1 in den fluoreszierenden zweiten Zustand geschaltet, dass möglichst viele der Moleküle 12 einzeln, d. h. in einem so großen Abstand zu benachbarten Molekülen 12 vorliegen, dass sie beim Abbilden auf das Sensorarray 6 in diskrete Intensitätsverteilung 14 resultieren, aus denen jeweils exakt die Ortslage des Moleküls 12 bestimmbar ist.

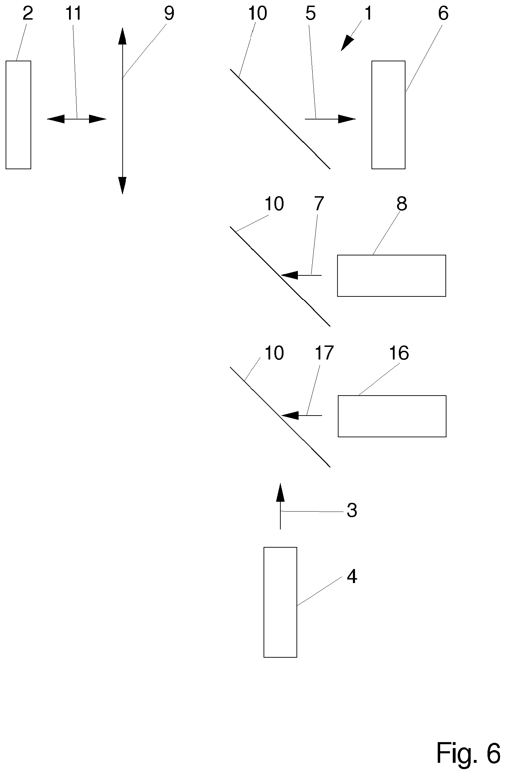

**Fig. 6** skizziert eine Ausführungsform des Fluoreszenzlichtmikroskops 1, die gegenüber der Ausführungsform gemäß Fig. 1 um eine Rückschaltsignalquelle 16 zur Beaufschlagung der Probe 2 mit einem Rückschaltsignal 17 ergänzt ist. Zum Überlagern des Strahlengangs des optischen Rückschaltsignals 17 ist ein weiterer halbdurchlässiger Spiegel 10 vorhanden. Mit dem Rückschaltsignal 17 werden die Moleküle der Substanz in der Probe 2 gezielt aus ihrem zweiten Zustand zurück in ihren ersten Zustand gebracht, um für die nächste Runde der Lagebestimmung einzelner Moleküle in der Probe 2 eine neue Auswahl an Molekülen mit dem Schaltsignal 7 zu treffen. Das neue Verfahren benötigt zur Ermittlung der Ortslage so vieler Moleküle, dass eine repräsentative Abbildung der mit ihnen markierten Struktur der Probe 2 erreicht wird, eine häufige Wiederholung der Auswahl einzelner Moleküle mit dem Umschaltsignal 7, wobei die zugrunde liegenden Übergangswahrscheinlichkeiten für immer wechselnde Selektionen sorgen, selbst wenn einzelne Moleküle mehrfach ausgewählt werden. Das Rückschaltsignal 17 wird nicht zwingend benötigt, wenn die Moleküle von selbst, d. h. durch thermische Anregung, binnen vertretbarer Zeit in Ihren ersten Zustand zurückgelangen oder auch durch Einwirkung des Anregungssignals 3. Anderenfalls ist das Rückschaltsignal 17 zwingend erforderlich.

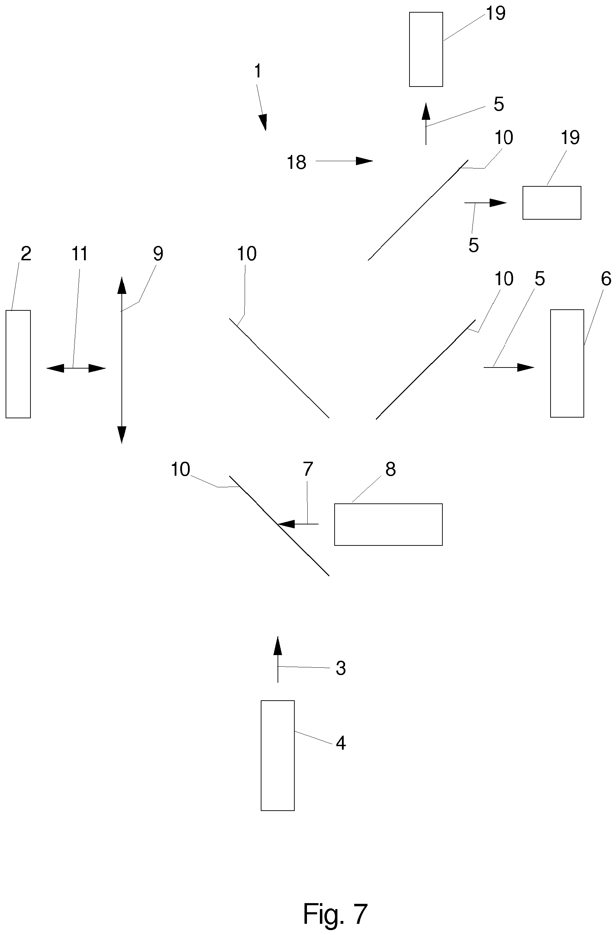

Das in **Fig. 7** skizzierte Fluoreszenzlichtmikroskop 1 weist die gemäß Fig. 6 ergänzte Rückschaltsignalquelle 16 nicht auf; sie könnte aber auch bei dieser Ausführungsform vorgesehen sein. Fig. 7 dient jedoch dazu, die zusätzliche Anordnung eines Photodetektors 18 zu erläutern. Der Photodetektor 18 ist dazu vorgesehen, die zeitliche Abfolge einzelner Photonen des Messsignals 5 zu registrieren, die aus einem Bereich der Probe stammen, der mehreren Pixeln des Sensorarrays 6 entspricht. Dabei soll diese Überwachung der Abfolge der Photonen dazu dienen, sehr schnell festzustellen, ob sich in dem jeweiligen Bereich nur ein einzelnes Molekül in dem fluoreszierenden Zustand befindet, oder ob mehrere Moleküle aus diesem Bereich Fluoreszenzlicht emittieren. Wenn es sich um mehrere Moleküle handelt, ist dies bei einer geringen Größe des Bereichs ein Hinweis darauf, dass die Intensitätsverteilungen des von ihnen ausgehenden Messlichts auf dem Sensorarray 6 nicht getrennt werden können, also nicht zu der Lagebestimmung einzelner Moleküle verwendet werden können. Entsprechend kann die Registrierung des Messsignals 5 mit dem Sensorarray 6 zugunsten einer neuen Auswahl von Molekülen mit dem Umschaltsignal 7 abgebrochen werden. Zumindest kann auf ein Auslesen der entsprechenden Bereiche des Sensorarrays 6 verzichtet werden. Z. B. in diesem Fall ist es sinnvoll, Photosensoren 18 für verschiedene Bereiche der Probe 2 bzw. des Sensorarrays 6 in Form eines weiteren Arrays mit einer jedoch geringeren Pixelanzahl vorzusehen. Konkret ist der Photodetektor 18 in Fig. 7 als Koinzidenzdetektoranordnung ausgebildet, wobei zwei Detektoreinheiten 19 mit Hilfe eines halbdurchlässigen Spiegels 10 als Strahlteiler parallel geschaltete sind. Die Koinzidenzdetektoranordnung detektiert solche Fälle, in denen sehr zeitnah zueinander Photonen des Messlichts 15 auf beide Detektoreinheiten 19 auftreffen, d. h. Koinzidenzen von Photonen. Solche Koinzidenzen können bei einem einzigen fluoreszierenden Molekül in dem von dem Photodetektor 18 erfassten Bereich der Probe 2 nicht auftreten, da ein einzelnes fluoreszierendes Molekül aufgrund seiner Anregung immer nur ein einzelnes Photon aussenden kann und die Aussendung des nächsten Photons erst in Folge seiner nächsten Anregung möglich ist, wobei zwischen den einzelnen Anregungen eine Mindestzeit liegt.

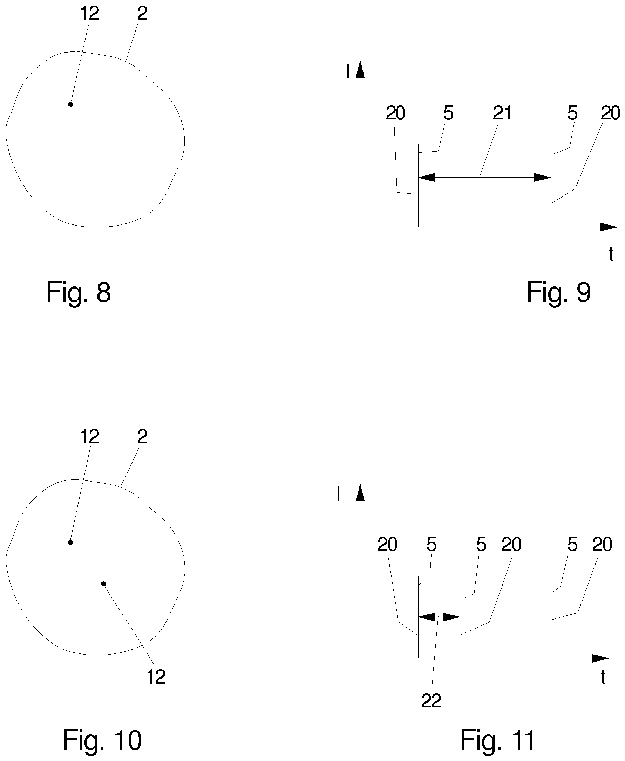

Diese Zusammenhänge werden noch einmal anhand der Fig. 8 bis 11 erläutert. Fig. 8 zeigt ein einzelnes Molekül, das gemäß Fig. 9 Photonen 20 des Messsignals 5 emittiert, die einen zeitlichen Mindestabstand 21 aufweisen. Wenn jedoch mit dem Photodetektor 18 gemäß Fig. 7 eine zeitliche Abfolge von Photonen 20 des Messsignals 5 registriert wird, wie sie in Fig. 11 skizziert ist, und bei der ein zeitlicher Abstand 22 zwischen zwei Photonen 20 auftritt, der viel kleiner als der Abstand 21 gemäß Fig. 9 ist, weist dies auf mindestens zwei fluoreszierende Moleküle 12 in dem Bereich hin, aus dem das Messsignal 5 stammt. Dieser Fall ist in Fig. 10 skizziert.

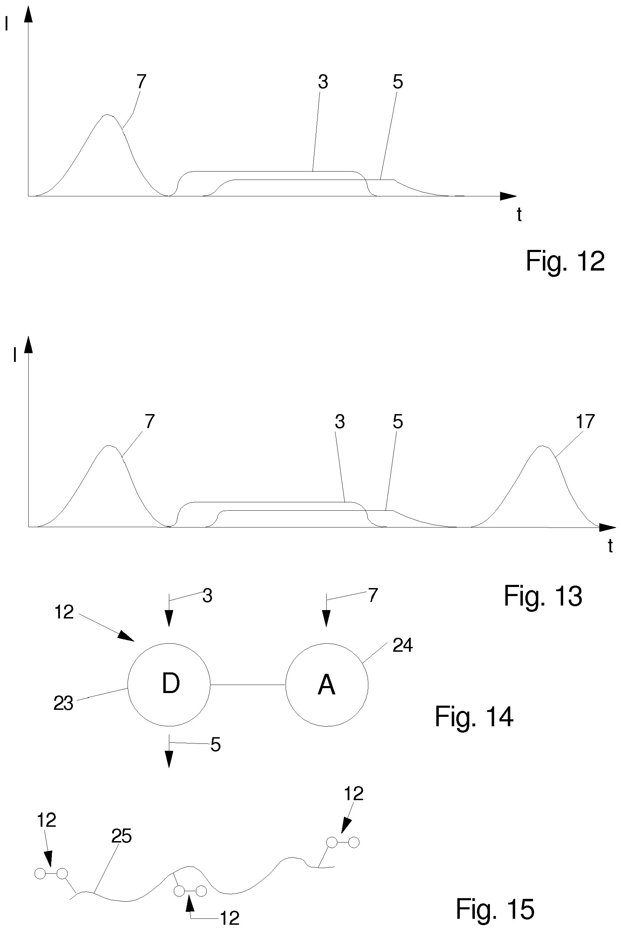

Fig. 12 ist eine Auftragung der zeitlichen Abfolge des Umschaltsignals 7 des Anregungssignals 3 und des Messsignals 5 bei der Ausführungsform des Fluoreszenzlichtmikroskops gemäß Fig. 1. Dabei ist zu betonen, dass die Signalformen hier nur sehr schematisch und nicht unbedingt realitätsgerecht wiedergegeben sind. Dargestellt werden soll im wesentlichen die zeitliche Abfolge, bei der zunächst mit dem Umschaltsignal 7 bestimmt Moleküle der Substanz in den zweiten Zustand überführt werden, die dann mit dem Anregungssignal 3 zu Fluoreszenz angerecht werden. Diese Fluoreszenz führt zu dem Messsignal 5, das nach dem Erlöschen des Anregungssignals 3 abklingt. Fig. 12 skizziert nur einen einzelnen Zyklus des mit dem Fluoreszenzlichtmikroskop 1 durchgeführten Verfahrens. Der nächste Zyklus mit derselben Signalabfolge beginnt, sobald die Moleküle der Substanz aus dem zweiten Zustand durch thermische Anregung oder auch durch das Anregungssignal 3 in ihren ersten Zustand zurückgekehrt sind.

Bei der Signalabfolge gemäß Fig. 13, die der Ausführungsform des Fluoreszenzlichtmikroskops 1 gemäß Fig. 6 entspricht, kann sich der nächste Zyklus des Verfahrens mit dem nächsten Umschaltsignal 7 sofort anschließen, weil am Ende jedes Zyklus das Rückschaltsignal 17 erfolgt, das die Moleküle der Substanz in jedem Fall in ihren ersten Zustand zurückführt.

Fig. 14 skizziert ein FRET-Paar aus einem Donor 23 und einem Akzeptor 24, die Untereinheiten eines Moleküls 12 bilden. Der Donor 23 und der Akzeptor 24 können Proteine sein, die zu dem Molekül 12 fusioniert sind. Konkret kann der Akzeptor ein als Dronpa bekanntes Protein sein, während es sich bei dem Donor um ein Protein des ECFP-Typs handeln kann. Die Funktion des FRET-Paars gemäß Fig. 14 bei dem zu dem erfindungsgemäßen Verfahren inversen Verfahren ist wie folgt. Der Akzeptor 24 ist photochrom und ändert aufgrund des Umschaltsignals 7 sein Absorptionsspektrum. Diese Verschiebung bei dem Absorptionsspektrum des Akzeptors 24 führt zu einer Veränderung des Fluoreszenzverhaltens des Donors 23. Konkret wird der Donor 23 fluoreszent, weil durch die Änderung des Absorptionsspektrums des Akzeptors 24 ein Energietransfer von dem Donor auf den Akzeptor in Folge einer Anregung des Donors durch das Anregungssignal 3 nicht mehr möglich ist und die Abregung des Donors nun vermehrt über die Emission von Fluoreszenzlicht, d. h. des Messsignals 5 erfolgen kann.

Fig. 15 skizziert, dass mit mehreren Molekülen 12 ein größeres Protein 25 auch an mehreren Punkten markiert werden kann, um beispielsweise Konformationsänderungen des Proteins 25, wie Faltungen, mit dem zu dem erfindungsgemäßen Verfahren inversen Verfahren zu beobachten. Typischerweise liegen die Punkte, an denen die Moleküle 12, die hier in Form des FRET-Paars gemäß Fig. 14 skizziert sind, dichter beieinander als eine mögliche räumliche Auflösungsgrenze bei der optischen Abbildung des Proteins 25. Bei dem zu dem erfindungsgemäßen Verfahren inversen Verfahren wird jedoch immer nur eines der Moleküle 12 an dem Protein 25 in den fluoreszenzfähigen Zustand überführt und dann seine Ortslage aufgrund des von ihm ausgehenden Messsignals exakt bestimmt. Dieser Vorgang wird vielfach wiederholt, wobei die Auswahl des jeweiligen Moleküls 12, dessen Ortslage exakt bestimmt wird, statistischen Gesetzen folgt, so dass bei der begrenzten Anzahl der Moleküle 12 an dem Protein 25 nach wenigen Wiederholungen alle Proteine 12 abgefragt sind, auch wenn die Auswahl jedes einzelne Mal nur von Übergangswahrscheinlichkeiten bestimmt wird.

### BEZUGSZEICHENLISTE

- 1: Fluoreszenzlichtmikroskop
- 2: Probe
- 3: Anregungssignal
- 4: Anregungssignalquelle
- 5: Messsignal
- 6: Sensorarray
- 7: Umschaltsignal
- 8: Umschaltsignalquelle
- 9: Abbildungsoptik
- 10: Halbdurchlässiger Spiegel
- 11: Doppelpfeil
- 12: Molekül
- 13: Abstand
- 14: Intensitätsverteilung
- 15: Intensitätsverteilung
- 16: Rückschaltsignalquelle
- 17: Rückschaltsignal
- 18: Photodetektor
- 19: Detektoreinheit
- 20: Photon
- 21: Abstand
- 22: Abstand
- 23: Donor
- 24: Akzeptor
- 25: Protein

## Patentansprüche

1. Verfahren zum räumlich hochauflösenden Abbilden einer interessierenden Struktur einer Probe, mit den Schritten:
- Auswählen einer Substanz aus einer Gruppe von Substanzen, die mit einem Umschaltsignal wiederholt aus einem ersten Zustand mit ersten optischen Eigenschaften in einen zweiten Zustand mit zweiten optischen Eigenschaften überführbar sind und die aus dem zweiten Zustand in den ersten Zustand zurückkehren können, wobei die Substanz aus einer Untergruppe von Substanzen ausgewählt wird, die in dem ersten Zustand mit einem optischen Anregungssignal (3) zur spontanen Emission von Fluoreszenzlicht anregbar sind und die in dem zweiten Zustand nicht fluoreszent sind;
- Markieren der interessierenden Struktur der Probe mit der Substanz;
- Abbilden der Probe auf ein Sensorarray, wobei eine räumliche Auflösungsgrenze der Abbildung größer (also schlechter) ist als ein mittlerer Abstand zwischen nächst benachbarten Molekülen der Substanz in der Probe;
- Überführen wechselnder Anteile der Substanz mit dem Umschaltsignal in den zweiten Zustand;
- Anregen des jeweils in dem ersten Zustand verbliebenen Anteils der Substanz durch das optische Anregungssignal (3) zu der spontanen Emission von Fluoreszenzlicht; und
- Registrieren des Fluoreszenzlichts als optisches Messsignal, das von dem jeweils in dem ersten Zustand verbliebenen Anteil der Substanz ausgeht, mit dem Sensorarray;
**dadurch gekennzeichnet,**
- **dass** beim Überführen des Anteils der Substanz in den zweiten Zustand eine Intensität des Umschaltsignals (7) so eingestellt wird, dass mindestens 10 % der jeweils in dem ersten Zustand verbleibenden Moleküle (12) der Substanz einen Abstand zu den ihnen nächst benachbarten Molekülen (12) in dem ersten Zustand aufweisen, der größer als die räumliche Auflösungsgrenze der Abbildung der Probe (2) auf das Sensorarray (6) ist, wobei die Auswahl der Moleküle (12), für die diese Bedingung zutrifft, auf Übergangswahrscheinlichkeiten beruht;
- **dass** das von den Molekülen (12) in dem ersten Zustand, die einen kleineren Abstand voneinander aufweisen, ausgehende Messsignal von dem Messsignal getrennt wird, das von den Molekülen (12) in ausreichendem Abstand zueinander ausgeht, und dass nur für den Fall, dass eine Entsprechung zu einem einzelnen Molekül (12) vorliegt, eine Bestimmung der Ortslage dieses Moleküls aus einer Intensitätsverteilung des Fluoreszenzlichts über das Sensorarray (6) erfolgt; und
- **dass** aus einer Summe der bestimmten Positionen der Moleküle (12) der wechselnden in dem ersten Zustand verbliebenen Anteile der Substanz eine Abbildung der Struktur gewonnen wird.

2. Verfahren nach Anspruch 1, **dadurch gekennzeichnet, dass** beim Überführen des Anteils der Substanz in den zweiten Zustand die Intensität des Umschaltsignals so eingestellt wird, dass mindestens 25 %, vorzugsweise mindestens 33 %, weiter bevorzugt mindestens 50 %, noch weiter bevorzugt mindestens 66 %, mehr bevorzugt mindestens 90 %, noch mehr bevorzugt mindestens 95 % und am meisten bevorzugt mindestens 98 % der jeweils in dem ersten Zustand verbleibenden Moleküle (12) der Substanz einen Abstand zu den ihnen nächst benachbarten Molekülen in dem ersten Zustand aufweisen, der größer als die räumliche Auflösungsgrenze der Abbildung der Probe (2) auf das Sensorarray (6) ist.

3. Verfahren nach Anspruch 1 oder 2, **dadurch gekennzeichnet, dass** dazu, ob eine Entsprechung zu einem einzelnen Molekül (12) vorliegt, geprüft wird, ob die Form und/oder die Fläche der Intensitätsverteilung des Fluoreszenzlichts über das Sensorarray einem einzelnen oder mehreren Molekülen (12) entspricht.

4. Verfahren nach einem der Ansprüche 1 bis 3, **dadurch gekennzeichnet, dass** das Umschaltsignal keine räumliche Strukturierung im Bereich der Probe aufweist.

5. Verfahren nach einem der Ansprüche 1 bis 4, **dadurch gekennzeichnet, dass** das Umschaltsignal ein optisches Umschaltsignal ist, wobei optional die Intensität des Umschaltsignals (7) über einen Bereich, der größere Abmessungen als die räumliche Auflösungsgrenze der Abbildung der Probe (2) auf das Sensorarray (6) aufweist, auf einen konstanten Wert eingestellt wird.

6. Verfahren nach Anspruch 5, **dadurch gekennzeichnet, dass** der konstante Wert in Abhängigkeit von einer lokalen Konzentration der Substanz in der Probe (2) festgelegt wird.

7. Verfahren nach einem der Ansprüche 1 bis 6, **dadurch gekennzeichnet, dass** ein Bereich der Probe (2), der mehreren Pixeln des Sensorarrays (6) entspricht, auf einen Photodetektor (18) abgebildet wird, um die zeitliche Abfolge der Emission einzelner Photonen (20) aus dem Bereich zu beobachten.

8. Verfahren nach einem der Ansprüche 1 bis 7, **dadurch gekennzeichnet, dass** die Substanz aus einer Untergruppe von Substanzen ausgewählt wird,
- die spontan, d. h. thermisch angeregt, aus ihrem zweiten Zustand in ihren ersten Zustand zurückkehren können und/oder
- die mit einem optischen Rückschaltsignal aus dem zweiten Zustand zurück in den ersten Zustand überführbar sind.

9. Verfahren nach einem der Ansprüche 1 bis 8, **dadurch gekennzeichnet, dass** die Substanz aus Förster-Resonanzenergietransfer-(FRET)-Paaren mit einem Donor (23) und einem Akzeptor (24) ausgewählt wird, wobei der Akzeptor (24) photochrom ist und mit dem Umschaltsignal (7) geschaltet wird, um Fluoreszenzeigenschaften des Donors (23) zu modulieren.

10. Verfahren nach einem der Ansprüche 1 bis 9, **dadurch gekennzeichnet, dass** die Substanz oder mindestens ein Bindungsplatz für die Substanz gentechnisch in ein Protein in der Probe (2) eingebaut oder an dieses angebaut wird.

11. Verfahren nach einem der Ansprüche 1 bis 10, **dadurch gekennzeichnet, dass** ein Proteinmolekül (25) in der Probe (2) an mehreren verschiedenen Punkten mit der Substanz markiert wird.

12. Verfahren nach einem der Ansprüche 1 bis 11, **dadurch gekennzeichnet, dass** es mit mindestens zwei verschiedenen Substanzen, von denen in ihrem jeweils ersten Zustand unterscheidbares Fluoreszenzlicht ausgeht, parallel durchgeführt wird.

13. Verfahren nach einem der Ansprüche 1 bis 12, **dadurch gekennzeichnet, dass** die Ortslagen der in dem ersten Zustand befindlichen Moleküle (12) der Substanz in der Probe (2), deren Abstand größer ist als die räumliche Auflösungsgrenze bei der Abbildung der Probe (2), aufgrund der ihnen zugehörigen Intensitätsverteilungen (14) des Fluoreszenzlichts über das Sensorarray (6) mit einer über die räumliche Auflösungsgrenze der Abbildung hinausgehenden Genauigkeit bestimmt werden.

14. Verfahren nach Anspruch 13, **dadurch gekennzeichnet, dass** mittels der Form der Intensitätsverteilung (14) auf die Ortslage in Z-Richtung innerhalb der Probe (2) rückgeschlossen wird.

15. Verfahren nach einem der Ansprüche 13 und 14, **dadurch gekennzeichnet, dass** die mit der Substanz markierte Struktur der Probe (2) mit jedem Umschaltzyklus mit immer höherer Dichte nach der Position einzelner Moleküle (12) der Substanz abgefragt wird und aus der Summe der bestimmten Positionen der Moleküle (12) die Abbildung der Struktur gewonnen wird, die eine Ortsauflösung jenseits der Beugungsgrenze aufweist.

## Claims

1. Method of high spatial resolution imaging a structure of interest of a sample, comprising the steps:
- selecting a substance from a group of substances which, by means of an optical switching signal, are repeatedly transferrable out of a first state with first optical properties into a second state with second optical properties and which may return out of the second state into the first state, wherein the substance is selected from a sub-group of substances which are excitable for spontaneous emission of fluorescence light by an optical excitation signal (3) in the first state and which are non-fluorescent in the second state;
- marking the structure of interest of the sample with the substance;
- imaging the sample onto a sensor array, wherein a spatial resolution limit of the imaging is higher (i.e. worse) than an average distance between nearest neighbouring molecules of the substance in the sample;
- transferring alternating portions of the substance into the second state by means of the switching signal;
- exciting that portion of the substance that, at a time, remains in the first state for spontaneous emission of fluorescence light by means of the optical excitation signal (3); and
- registering the fluorescence light as an optical measurement signal which is emanating from that portion of the substance that, at a time, remains in the first state by means of the sensor array;
**characterised in**
- **that**, in transferring the portion of the substance into the second state, an intensity of the switching signal (7) is adjusted in such a way that at least 10 % of the molecules (12) of the substance that, at a time, remain in the first state have a distance to their nearest neighbouring molecules (12) in the first state which is higher than the spatial resolution limit of the imaging of the sample (2) onto the sensor array (6), wherein the selection of the molecules (12) to which this condition applies is based on transition probabilities;
- **that** the measurement signal emanating from the molecules (12) in the first state which have a smaller distance than the spatial resolution limit from each other is separated from the measurement signal emanating from the molecules (12) at a sufficient distance, and that only in that case that a correspondence to a single molecule (12) is given, a determination of the position of this molecule is made from an intensity distribution of the measurement signal over the sensor array; and
- **that**, from a sum of the determined positions of the molecules (12) of the alternating portions of the substance remaining in the first state, an image of the structure is obtained.

2. Method of claim 1, **characterised in that**, in transferring the portion of the substance into the second state, the intensity of the switching signal is adjusted in such a way that at least 25 %, preferably at least 33 %, further preferably at least 50 %, even further preferably at least 66 %, more preferably at least 90 %, even more preferably at least 95 % and most preferably at least 98 % of the molecules (12) of the substance that, at a time, remain in the first state have a distance to their nearest neighbouring molecules in the first state which is higher than the spatial resolution of the imaging of the sample (2) onto the sensor array (6).

3. Method of claim 1 or 2, **characterised in that**, for examining whether a correspondence to a single molecule (12) is given, it is examined whether the shape and/or the area of the intensity distribution of the measurement signal over the sensor array correspond to a single or several molecules (12).

4. Method of any of the claims 1 to 3, **characterised in that** the switching signal has no spatial structuring in the area of the sample.

5. Method of any of the claims 1 to 4, **characterised in that** the switching signal is an optical switching signal, wherein, optionally, the intensity of the switching signal (7) over an area which has bigger dimensions than the spatial resolution limit of the imaging of the sample (2) onto the sensor array (6) is set to a constant value.

6. Method of claim 5, **characterised in that** the constant value is set depending on a local concentration of the substance in the sample (2).

7. Method of any of the claims 1 to 6, **characterised in that** an area of the sample (2) which corresponds to several pixels of the sensor array (6) is imaged onto a photo detector (18) to monitor a temporal succession of the emission of individual photons (20) out of the area.

8. Method of any of the claims 1 to 7, **characterised in that** the substance is selected from a sub-group of substances
- which spontaneously, i.e. thermally excited, may return out of their second state into their first state and/or
- which are transferrable back out of their second state into their first state by means of an optical switch back signal.

9. Method of any of the claims 1 to 8, **characterised in that** the substance is selected from Forster-Resonance-Energy-Transfer-(FRET-)-pairs comprising a donor (23) and an acceptor (24), wherein the acceptor (24) is photo-chromic and switched by means of the switching signal (7) to modulate fluorescence properties of the donor (23).

10. Method of any of the claims 1 to 9, **characterised in that** the substance or at least a coupling site for the substance is built into a protein of the sample (2) or attached thereto by means of genetic engineering.

11. Method of any of the claims 1 to 10, **characterised in that** a protein molecule (25) in the sample (2) is marked with the substance at several different points.

12. Method of any of the claims 1 to 11, **characterised in that** it is executed in parallel with at least two different substances emitting distinguishable optical measurement signals in their respective first state.

13. Method of any of the claims 1 to 12, **characterised in that** the positions of the molecules (12) of the substance in the sample (2) being in the first state, whose distance is higher than a spatial resolution limit in imaging the sample (2), are determined based on their associated intensity distributions (14) of the measurement signal over the sensor array (6) at a precision exceeding the spatial resolution limit of the imaging.

14. Method of claim 13, **characterised in that** the position in z-direction within the sample (2) is deduced from the shape of the intensity distribution (14).

15. Method of any of the claims 13 and 14, **characterised in that**, with each switching cycle, the structure of the sample (2) marked with the substance is sampled at an steadily increasing density for the position of individual molecules (12), and that, from a sum of the determined positions of the molecules (12), the imaging of the structure is obtained which has the spatial resolution beyond the diffraction barrier.

## Revendications

1. Procédé de représentation spatiale haute résolution d'une structure intéressante d'un échantillon, avec les étapes suivantes :
- sélection d'une substance dans un groupe de substances, qui peuvent passer, grâce à un signal de commutation, de manière répétée, d'un premier état avec des premières propriétés optiques, à un deuxième état avec des deuxièmes propriétés optiques et qui peuvent retourner du deuxième état au premier état, dans lequel la substance est sélectionnée dans un sous-groupe de substances qui, dans le premier état, peuvent être excitées avec un signal d'excitation optique (3) pour l'émission spontanée de lumière fluorescente et qui ne sont pas fluorescentes dans le deuxième état ;
- marquage de la structure intéressante de l'échantillon avec la substance ;
- représentation de l'échantillon sur une matrice de capteurs, dans lequel une limite de résolution spatiale de la représentation est plus grande (donc plus mauvaise) qu'une distance moyenne entre des molécules adjacentes de la substance dans l'échantillon ;
- passage de parts variables de la substance avec le signal de commutation dans le deuxième état ;
- excitation de la part de la substance restant dans le premier état par le signal d'excitation optique (3) pour l'émission spontanée d'une lumière fluorescente ; et
- enregistrement de la lumière fluorescente sous la forme d'un signal de mesure optique, qui provient de la part de la substance restant dans le premier état, avec la matrice de capteurs ;
**caractérisé en ce que**
- lors du passage de la part de la substance dans le deuxième état, une intensité du signal de commutation (7) est réglée de façon à ce qu'au moins 10 % des molécules (12) de la substance restant dans le premier état présentent une distance par rapport aux molécules (12) les plus proches dans le premier état, qui est supérieure à la limite de résolution spatiale de la représentation de l'échantillon (2) sur la matrice de capteurs (6), dans lequel la sélection des molécules (12) pour lesquelles cette condition est remplie, repose sur des probabilités de transition ;
- le signal de mesure provenant des molécules (12) dans le premier état, qui présentent une distance plus faible entre elles, est séparé du signal de mesure provenant des molécules (12) à une distance suffisante entre elles et, uniquement dans le cas où il existe une correspondance avec une seule molécule (12) une détermination de la position de cette molécule a lieu à partir d'une répartition d'intensité de la lumière fluorescente sur la matrice de capteurs (6) ; et
- une représentation de la structure est obtenue à partir d'une somme des positions déterminées des molécules (12) des parts variables de la substance restant dans le premier état.

2. Procédé selon la revendication 1, **caractérisé en ce que**, lors du passage de la part de la substance dans le deuxième état, l'intensité du signal de commutation est réglé de façon à ce qu'au moins 25 %, de préférence au moins 33 %, de préférence au moins 50 %, de préférence au moins 66 %, de préférence au moins 90 %, de préférence au moins 95 % et de préférence au moins 98 % des molécules (12) de la substance restant dans le premier état présentent, par rapport aux molécules les plus proches dans le premier état, une distance qui est supérieure à la limite de résolution spatiale de la représentation de l'échantillon (2) sur la matrice de capteurs (6).

3. Procédé selon la revendication 1 ou 2, **caractérisé en ce que**, en plus de la vérification si une correspondance existe avec une seule molécule (12), il est vérifié si la forme et/ou la surface de la répartition d'intensité de la lumière fluorescente sur la matrice de capteurs correspond à une seule ou à plusieurs molécules (12).

4. Procédé selon l'une des revendications 1 à 3, **caractérisé en ce que** le signal de commutation ne présente aucune structuration spatiale au niveau de l'échantillon.

5. Procédé selon l'une des revendications 1 à 4, **caractérisé en ce que** le signal de commutation est un signal de commutation optique, dans lequel, en option, l'intensité du signal de commutation (7) est réglée, sur une zone qui présente des dimensions supérieures à la limite de résolution spatiale de la représentation de l'échantillon (2) sur la matrice de capteurs (6), à une valeur constante.

6. Procédé selon la revendication 5, **caractérisé en ce que** la valeur constante est définie en fonction d'une concentration locale de la substance dans l'échantillon (2).

7. Procédé selon l'une des revendications 1 à 6, **caractérisé en ce qu'**une partie de l'échantillon (2), qui correspond à plusieurs pixels de la matrice de capteurs (6), est représentée sur un photodétecteur (18) afin d'observer la séquence temporelle de l'émission de photons individuels (20) à partir de la partie.

8. Procédé selon l'une des revendications 1 à 7, **caractérisé en ce que** la substance est sélectionnée dans un sous-groupe de substances,
- qui peuvent retourner spontanément, c'est-à-dire excitées thermiquement, de leur deuxième état vers leur premier état et/ou
- qui peuvent passer, avec un signal de commutation de retour optique, du deuxième état au premier état.

9. Procédé selon l'une des revendications 1 à 8, **caractérisé en ce que** la substance est sélectionnée parmi des paires de transfert d'énergie de résonance de Förster (FRET) avec un donneur (23) et un accepteur (24), dans lequel l'accepteur (24) est photochrome et est commuté avec le signal de commutation (7) afin de moduler les propriétés de fluorescence du donneur (23).

10. Procédé selon l'une des revendications 1 à 9, **caractérisé en ce que** la substance ou au moins un emplacement de liaison pour la substance est intégré ou monté par génie génétique dans une protéine de l'échantillon (2).

11. Procédé selon l'une des revendications 1 à 10, **caractérisé en ce qu'**une molécule de protéine (25) de l'échantillon (2) est marquée au niveau de plusieurs points différents avec la substance.

12. Procédé selon l'une des revendications 1 à 11, **caractérisé en ce qu'**il est exécuté en parallèle avec au moins deux substances différentes, d'où proviennent des lumières fluorescentes différentes dans leur premier état respectif.

13. Procédé selon l'une des revendications 1 à 12, **caractérisé en ce que** les positions des molécules (12) de la substance se trouvant dans le premier état dans l'échantillon (2), dont la distance est supérieure à la limite de résolution spatiale lors de la représentation de l'échantillon (2), sont déterminées sur la base des répartitions d'intensité (14) correspondantes de la lumière fluorescente sur la matrice de capteurs (6) avec une précision allant au-delà de la limite de résolution spatiale de la représentation.

14. Procédé selon la revendication 13, **caractérisé en ce que**, grâce à la forme de la répartition d'intensité (14), il est possible de déduire la position dans la direction Z à l'intérieur de l'échantillon (2).

15. Procédé selon l'une des revendications 13 et 14, **caractérisé en ce que** la structure de l'échantillon (2) marquée avec la substance est interrogée à chaque cycle de commutation avec une densité toujours plus élevée selon la position des molécules individuelles (12) de la substance et, à partir de la somme des positions déterminées des molécules (12), une représentation de la structure est obtenue, qui présente une résolution locale au-delà de la limite de diffraction.
